# EUROPÄISCHE PATENTANMELDUNG

(11) **EP 3 451 254 A1**
(43) Veröffentlichungstag der Anmeldung: **06.03.2019**
(21) Anmeldenummer: 17189210.2
(22) Anmeldetag: 04.09.2017
(51) Int. Cl.: G06Q 10/06, G06Q 10/10

(54) **VERFAHREN ZUM BETRIEB EINER EIN- UND AUSGABEVORRICHTUNG FÜR EINE INDUSTRIELLE ANLAGE SOWIE EIN- UND AUSGABEVORRICHTUNG**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Die Erfindung betrifft ein Verfahren zum Betrieb einer Ein- und Ausgabevorrichtung für eine industrielle Anlage sowie eine Ein- und Ausgabevorrichtung. Die Ein- und Ausgabevorrichtung (14a, 14b) umfasst einen Dokumentationsmanager (18), welcher eine Anlagendokumentation (23) für die industrielle Anlage bereitstellt, und einen Dokumentenbetrachter (20) zur Anforderung und Ausgabe zumindest eines Teils der Anlagendokumentation (23). Es werden Maßnahmen vorgeschlagen, mittels der einem Anwender (3) die für ihn relevante Anlagendokumentation verbessert sowie vereinfacht bereitgestellt werden kann. Vorteilhaft ist, dass dem Anwender (3) "fehlendes" Wissen gezielt bereitgestellt werden kann. Dieses "fehlende" Wissen wird durch die für ihn bereitgestellte "richtige" bzw. "sinnvolle" Dokumentation ausgeglichen und die Handhabung der Ein- und Ausgabevorrichtung (14a, 14b) wird vereinfacht.

## Beschreibung

Die Erfindung betrifft ein Verfahren zum Betrieb einer Ein- und Ausgabevorrichtung für eine industrielle Anlage gemäß dem Oberbegriff des Patentanspruchs 1 sowie eine Ein- und Ausgabevorrichtung gemäß dem Oberbegriff des Anspruchs 8.

Um z. B. die umfassende Funktions- und Wirkungsweise eines Prozessleitsystems nutzen zu können, sind die Anwender eines derartigen Prozessleitsystems, wie es beispielsweise aus dem Siemens-Katalog SIMATIC PCS 7, Ausgabe 2016 bekannt ist, auf eine geeignete Dokumentation über dieses Leitsystem angewiesen.

Abhängig von der Rolle des Anwenders, d. h. je nachdem, ob der Anwender beispielsweise als Administrator, Projekteur, Operator, Wartungs- oder als Service-Ingenieur fungiert, und abhängig von der zu lösenden Steueraufgabe sind für den Anwender aus der Vielzahl von Dokumenten nur bestimmte ("richtige") Dokumente hilfreich. Je umfangreicher und umfassender die gesamte zur Verfügung stehende Dokumentation ist, desto zeitaufwendiger ist die Suche nach dem "richtigen" Dokument.

Gewöhnlich ist es möglich, die Dokumente bzw. die Dokumentation nach Kategorien bzw. Suchwörtern zu filtern, wobei die Suche meistens individuell erfolgt. Dies bedeutet, dass der Anwender nicht von Erfahrungen und Suchergebnissen eines anderen Anwenders profitieren kann, auch dann nicht, wenn beiden Anwendern exakt die gleichen Rollen zugewiesen wurden und/oder beide Anwender exakt die gleichen Aufgaben lösen müssen. Es kommt daher häufig vor, dass mehrere Anwender gleichzeitig oder zu unterschiedlichen Zeitpunkten die gleiche Aufgabe bewältigen und/oder das gleiche Problem lösen müssen und dadurch einen vergleichbar hohen Aufwand in die Suche nach der "richtigen" Dokumentation investieren. Darüber hinaus ist es aus dem gleichen Grund nicht ausgeschlossen, dass ein Anwender einen aufwendigen Suchvorgang zu einem späteren Zeitpunkt nochmals durchführt, falls er die gefundene Dokumentation nicht lokal abgespeichert hat. Nachteilig an einem lokalen Abspeichern der gefundenen Dokumente nach einer erfolgreichen Suche ist allerdings, dass der Anwender eventuell vorgenommene Erweiterungen und/oder Korrekturen an der Dokumentation nicht berücksichtigen kann.

Der vorliegenden Erfindung liegt daher die Aufgabe zugrunde, ein Verfahren der eingangs genannten Art anzugeben, mittels dessen einem Anwender die für ihn relevante Anlagendokumentation vereinfacht bereitgestellt werden kann. Darüber hinaus ist eine Ein- und Ausgabevorrichtung zur Durchführung des Verfahrens zu schaffen.

Diese Aufgabe wird im Hinblick auf das Verfahren durch die im kennzeichnenden Teil des Anspruch 1 angegebenen, bezüglich der Ein- und Ausgabevorrichtung durch die im kennzeichnenden Teil des Anspruchs 8 angegebenen Maßnahmen gelöst.

Dadurch, dass die angeforderte Anlagendokumentation oder der angeforderte Teil dieser Anlagendokumentation nicht vollständig sondern nur beschränkt gemäß dem Dokumentationsprofil des Anwenders ausgegeben wird, kann dem Anwender "fehlendes" Wissen gezielt bereitgestellt werden. Dieses "fehlende" Wissen wird durch die für ihn "richtige" bzw. "sinnvolle" Dokumentation ausgeglichen und die Handhabung der Ein- und Ausgabevorrichtung wird vereinfacht.

Es wird darauf hingewiesen, dass unter dem Begriff "Dokumentation" bzw. "Anlagendokumentation" sowohl die Dokumentation der Hard- und Software-Komponenten (Engineering-System, Operator-System, Automatisierungsgeräte, dezentrale Peripherien, Feldgeräte, Steuerprogramme, ...) eines Prozessleitsystems als auch die Dokumentation der Komponenten (Rohrleitungen, Pumpen, Ventile, Heizkessel, ...) der zu steuernden industriellen Anlage verstanden wird.

Bestandteile dieser Anlagendokumentation sind eine Produktdokumentation und eine Projektdokumentation, wobei
- die Produktdokumentation z. B. Gerätehandbücher, Bediener- und Benutzeranleitungen, Betriebsanleitungen, Service-Unterlagen, Produktkataloge, Programmieranleitungen für die in der industriellen Anlage eingesetzten Hard- und Softwarekomponenten und
- die Projektdokumentation z. B. die Beschreibungen der verfahrenstechnischen und/oder fertigungstechnischen Prozessabläufe
umfasst.

Ferner wird unter dem Begriff "Ausgabe" im Zusammenhang mit der Dokumentation die Ausgabe dieser Dokumentation auf einer Anzeigeeinheit und/oder auf einem Drucker und/oder zur Hinterlegung der Dokumentation in einem Speicher oder Speichermedium verstanden.

Darüber hinaus wird unter dem Begriff "industrielle Anlage" auch das Prozessleitsystem verstanden, das zum Projektieren und Konfigurieren sowie zum Bedienen und Beobachten (Prozessbeobachtung und -führung) der industriellen Anlage vorgesehen ist.

In einer Ausgestaltung der Erfindung ist vorgesehen, dass die beschränkt ausgegebene Anlagendokumentation oder der beschränkt ausgegebene Teil dieser Anlagendokumentation - im Folgenden auch als "angezeigtes Dokument" bezeichnet - durch den Anwender quittiert und/oder signiert wird.

Aufgrund der Quittierung bestätigt der Anwender bzw. Benutzer, dass er das angezeigte Dokument vollständig oder teilweise gelesen hat. Weichen anschließend die von ihm durchgeführten Aktionen von der in dem angezeigten Dokument empfohlenen Aktionen ab, was sich störend auf den Betrieb der industriellen Anlage bzw. auf die Prozessteuerung auswirken kann, so kann der Anwender im Rahmen einer Fehler- oder Störungs-Analyse an die von ihm gelesenen und quittierten Empfehlungen "erinnert" bzw. hingewiesen werden. Darüber hinaus können weitere "Eskalationsstufen" definiert werden, um Aktionen, die nachweisbar nicht zum Erfolg führen, zu unterbinden und weitere adäquate Aktionen auszulösen.

Für den Fall, dass der Anwender die Quittierung auch signiert, wird eine so genannte "Nichtabstreitbarkeit" sichergestellt, was bedeutet, dass der Anwender nicht abstreiten kann, dass er das angezeigte Dokument erhalten und als gelesen quittiert hat. Durch eine kontinuierliche Analyse der aktuellen Situation bzw. des Handlungsbedarfs während des Betriebs (Laufzeit) der industriellen Anlage unter Berücksichtigung des Dokumentationsprofils des Anwenders ergeben sich verbindliche Pflichten und Handlungsanweisungen.

In einer weiteren Ausgestaltung der Erfindung werden als Kriterium zur Erstellung des Dokumentationsprofils Zugriffsrechte des Anwenders auf Hard- und/oder Software-Komponenten der industriellen Anlage berücksichtigt, wobei die Zugriffsrechte abhängig von der Rolle des Anwenders sind. Durch eine derartige Beschränkung wird das angezeigte Dokument auf die Aufgaben und Belange beispielsweise eines Administrators, eines Projekteurs, eines Operators, oder eines Wartungs- oder Service-Ingenieurs zielgerichtet beschränkt bzw. eingeschränkt, wobei ferner für die Beschränkung technologische Anlagenteile (Teilanlagenbereich/Arbeitsbereich) einer technologischen Hierarchie berücksichtigt werden. Beispielweise beschränkt sich die einem Operator angezeigte Dokumentation auf einen Regler-Baustein einer Teilanlage in der technologischen Hierarchie
"Anlage\Teilanlage_1\Tank_1\Regler_01".

Es ist ferner vorgesehen, dass mittels eines Profilers der Ein- und Ausgabevorrichtung Bedienabläufe und/oder Bedienhandlungen eines Anwenders während des Anlagenbetriebs erfasst und diese mittels des Selektors als Kriterium zur Erstellung des Dokumentationsprofils berücksichtigt werden. Dies bedeutet, dass das Verhalten des Anwenders beispielsweise im Rahmen der Bedienung und Beobachtung der Anlage bzw. des zu steuernden Prozesses "mitgeloggt" und durch ein vollständiges Anwenderlog (lokales Archiv) analysiert wird, um entsprechende Kapitel in der Dokumentation vorschlagen bzw. bereitstellen zu können. Adäquate Kapitelvorschläge tragen erheblich zur Effizienzverbesserung des Anwenders bei, insbesondere deshalb, weil oftmals viele Alternativen für Handlungen existieren, wovon einige für bestimmte Operatoren effizienter sind. Beispielsweise wird im Rahmen einer individuellen Bedienführung geprüft, wie ein Operator Alarme quittiert. Als Ergebnis werden dem Operator Dokumente bereitgestellt, die dem Operator effizientere Alternativen vorschlagen. Ferner kann dem Operator darauf hingewiesen werden, welche weiteren Operatoren diese Dokumente bereits gelesen haben.

Darüber hinaus kann das Anwenderlog dazu genutzt werden, um z. B. Projektierungsfehler oder Projektierungspotential zu erkennen. Dies ist insbesondere dann hilfreich, wenn mehrere Operatoren gleichzeitig dieselbe Teilanlage überwachen. Dies kann dann entsprechend in eine überarbeite Anlagendokumentation überführt werden.

In einer Ausgestaltung der Erfindung ist vorgesehen, dass mittels des Selektors zur Erstellung des Dokumentationsprofils als weiteres Kriterium Alarmmeldungen der Anlage berücksichtigt werden. Für den Fall, dass z. B. aufgrund einer Anlagenstörung ein entsprechender Alarm gemeldet wird, wird dem Operator die zu diesem Alarm "passende" Dokumentation oder auch die passende Stelle innerhalb dieser Dokumentation angezeigt.

Dadurch, dass der Selektor zur Erstellung des Dokumentationsprofils als Kriterium die Eigenschaft eines Clients der Ein- und Ausgabevorrichtung berücksichtigt, wird die Ausgabe der Dokumentation so beschränkt, dass diese Ausgabe nur die auf dem verwendeten Client bzw. Gerät durchführbaren Arbeiten umfasst. Für den Fall, dass z. B. der Client als Tablet ausgebildet ist, werden nur Arbeiten vorgeschlagen, die im Rahmen einer Touchbedienung bewerkstelligt werden können, wobei ferner das Layout der angezeigten Seiten an dieses Tablet angepasst wird. Darüber hinaus wird die Ausgabe geeigneter Dokumente gerätspezifisch so gestaltet, dass z. B. einem Gerät in Form eines Operator-Clients die Ausgabe beschränkt wird auf die Dokumentation für die Prozessbedien- und Prozessbeobachtung, dagegen die Ausgabe einer für einen Projekteur vorgesehen Dokumentation blockiert wird.

Die Anlagendokumentation umfasst - wie erwähnt - die Produktdokumentation und die Projektdokumentation, wobei die Dokumentation ferner auch rollen-, berechtigungs- und anwenderspezifische Tooltipps - die z. B. mittels eines Mausklicks angezeigt werden - und/oder erweiterte Tooltipps, beispielsweise zu Buttons und Prozessobjekten (Block Icons, Faceplates, Bausteine, ...) aufweisen kann. Rollenspezifisch bedeutet, dass z. B. einem Operator andere Tooltipps als einem Projekteur zugesprochen werden. Berechtigungsspezifisch besagt, dass z. B. einem Operator, der nur View-Rechte hat, andere Tooltipps zugewiesen werden als einem Benutzer mit "höheren" Rechten. Anwenderspezifisch bedeutet, dass einem Anwender auch Tooltipps zugeteilt werden, die sich aus der Analyse seines Verhaltens, das im Anwenderlog abgebildet ist, ableiten lassen.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Objektmodell für die Selektion und Beschränkung einer Anlagendokumentation für einen Anwender und
- Figur 2: eine Ein- und Ausgabevorrichtung eines Prozessleit-systems.

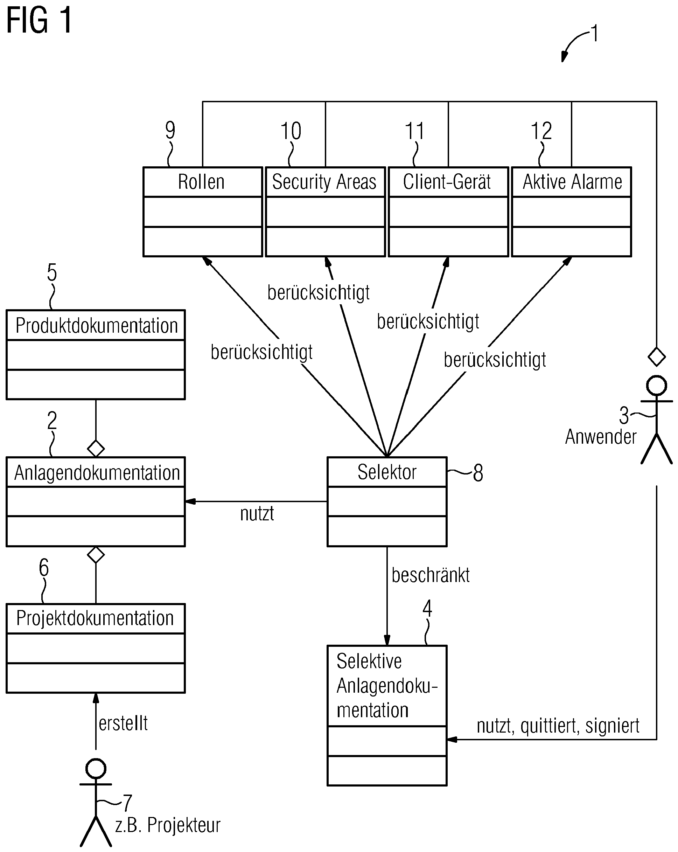

In Figur 1 ist 1 ein UML(Unified Modeling Language)-Diagramm dargestellt, mittels dessen die Zusammenhänge zwischen einer umfangreichen Anlagendokumentation 2 und einer spezifisch für einen Anwender 3 zusammengestellten Dokumentation 4 veranschaulicht sind. Die Anlagendokumentation 2 setzt sich aus einer Produktdokumentation 5 und einer Projektdokumentation 6 zusammen, wobei die Produktdokumentation 5, z. B. Gerätehandbücher, Bediener- und Benutzeranleitungen, Betriebsanleitungen, Service-Unterlagen, Produktkataloge, Programmieranleitungen, Beschreibungen von Bibliotheken, Tooltipps, ... , für die in der industriellen Anlage eingesetzten Hard- und Softwarekomponenten umfasst und wobei die Projektdokumentation 6 eine Beschreibung von verfahrenstechnischen oder fertigungstechnischen Prozessabläufen (anlagenspezifische Dokumentation für den Betrieb der Anlage, der Teilanlagen, ...) beinhaltet, die z. B. ein Projekteur 7 erstellt.

Um die äußerst umfangreiche Anlagendokumentation anwenderspezifisch auf für den Anwender 3 relevante Teile zu reduzieren, erstellt ein Selektor ein Dokumentationsprofil für den Anwender 3, wobei dieses Dokumentationsprofil nach Maßgabe mindestens eines vorgebbaren oder vorgegebenen Kriteriums erstellt wird. Im vorliegenden Ausführungsbeispiel basiert das Dokumentationsprofil auf den Kriterien "(Anwender)Rollen 9, Zugriffsbereiche 10, Client-Geräte 11 und aktive Alarme 12", wodurch der Selektor 8 folgende Funktionalitäten bereitstellt:
- Anhand des angemeldeten Anwenders - z. B. eines Operators - nutzt der Selektor die Information in welcher Rolle 9 der Anwender sich angemeldet hat, für welchen Bereich 10 (Security Areas - z. B. Teilanlage 1) der Anwender zugriffsberechtigt ist und über welches Client-Gerät (z.B. OS (Operator Station)-Client 1 mit Bedienberechtigung) er sich eingewählt hat, um die verfügbare Dokumentation auf die für den Anwender relevanten Anteile zu beschränken. Diese relevanten Anteile werden dem Client-Gerät ausgegeben, wobei diese Anteile beispielsweise auf einer Anzeige des Clients-Gerätes 11 angezeigt und/oder in einem Speicher des Gerätes 11 oder eines Servers hinterlegt werden. Der Anwender 3 quittiert die ausgegebenen Anteile und/oder signiert diese mittels seines "Privaten Schlüssels", wobei aufgrund dieser Signierung sichergestellt wird, dass der Anwender nicht abstreiten kann, dass er das angezeigte Dokument erhalten und als gelesen quittiert hat.
- Um den aus den Kriterien "Rollen 9, Security Areas 10 und Client-Gerät 11 bestehenden Filter vereinfacht anwenden zu können, werden die unterschiedlichen Abschnitte der Dokumentation mit entsprechenden Metadaten versehen. So lauten z. B. die Metadaten eines Kapitels "Bedienung Teilanlage 1" in der Projektdokumentation:
   Rolle: Operator;
   SecurityArea: Teilanlage1;
   Geräte: Clients + Bedienberechtigung.

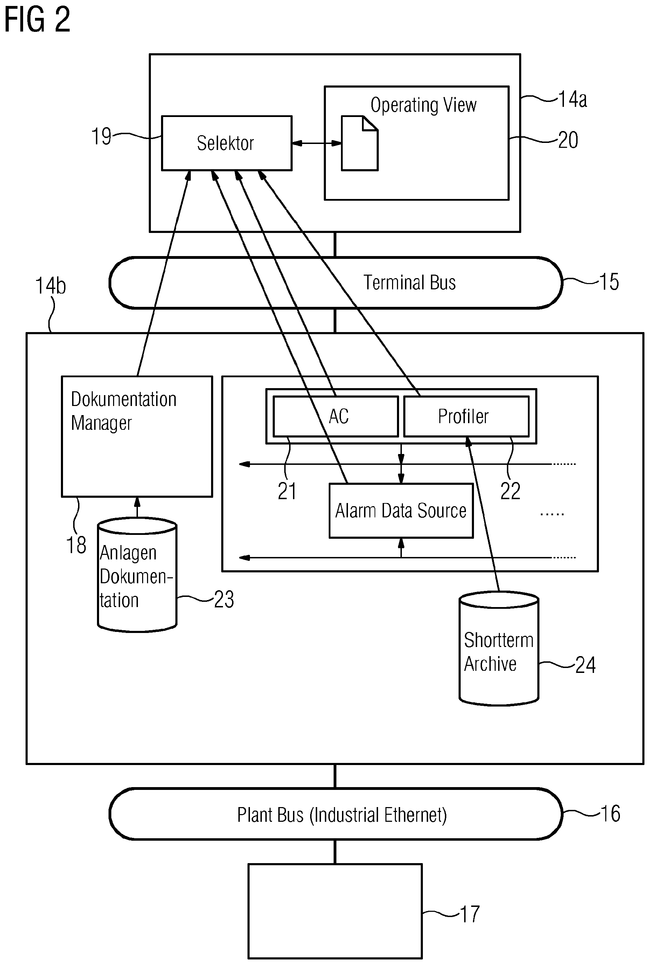

Im Folgenden wird auf Figur 2 verwiesen, in welcher eine Ein- und Ausgabevorrichtung eines Prozessleitsystems dargestellt ist. Die Ein- und Ausgabevorrichtung ist im vorliegenden Beispiel als Operator-Station 14a, 14b ausgebildet, die zur Beobachtung und zur Führung eines zu steuernden technischen Prozesses bzw. einer zu steuernden industriellen Anlage durch einen Operator vorgesehen ist. Die Operator-Station 14a, 14b umfasst einen OS-Client 14a und einen mit diesem OS-Client 14a über einen Terminal Bus 15 verbundenen OS-Server 14b, der ferner über einen Plant Bus 16 mit einem Automatisierungsgerät 17 Informationen austauscht.

Die Operator-Station 14a, 14 b weist einen Dokumentations-Manager 18 und einen mit diesem Dokumentations-Manager 18 kommunikativ verbundenen Selektor 19 auf, wobei im vorliegenden Ausführungsbeispiel der Dokumentations-Manager 18 im Server 14b und der Selektor 19 im OS-Client 14a integriert ist. Selbstverständlich kann der Dokumentations-Manager 18 Bestandteil eines beliebigen Servers des Prozessleitsystems sein, beispielsweise Bestandteil eines Engineering-Servers.

Der Dokumentations-Manager 18 stellt eine Anlagendokumentation 23 bereit, die - wie erläutert - eine Produkt- und eine Projektdokumentation umfasst, wobei der Anwender 3 mittels eines Dokumentenbetrachters ("Operating View") 20 des OS-Clients 14a die gewünschte Dokumentation über den Terminal Bus 15 vom Dokumentations-Manager 18 anfordert. Diese Anforderung bewerkstelligt der Anwender mittels einer entsprechenden Eingabe am OS-Client 14a, die dem Selektor 19 zugeführt wird. Welche Teile dieser angeforderten Dokumentation tatsächlich angezeigt bzw. dem Anwender bereitgestellt werden, ist - wie bereits veranschaulicht - abhängig von dem Dokumentationsprofil des Anwenders 3, das der Selektor 19 aufgrund der beschriebenen Kriterien erstellt. In Abhängigkeit des Dokumentationsprofils dieses Anwenders wird die Ausgabe der angeforderten Dokumentation beschränkt.

Der Selektor 19 filtert quasi gemäß den zuvor beschriebenen Kriterien die "Antworten" des Dokumentations-Managers 18, wobei für den Filter der Selektor 19 die Rolle und die Security Areas des Anwenders aus einer Access Control Komponente (AC) 21 des OS-Servers 14b und eine Kennung des Clients 14a, welche die Eigenschaft des Clients bezüglich eines "Responsive Designs" repräsentiert, vom OS-Client 14a lokal bezieht.

Der Selektor 19 ist dazu ausgebildet, die selektive Anlagendokumentation bzw. die beschränkte Ausgabe auch priorisiert darstellen, z.B. angelehnt an die aktiven Alarme des Prozessleitsystems. So können Abschnitte/Kapitel gezielt "vorgeschoben" werden, so dass der Anwender beim Öffnen der selektiven Anlagendokumentation zuerst die Dokumentationsteile sieht, die er zur Behandlung der aktiven Alarme benötigt.

Der Selektor 19 des OS-Clients 14a ist ferner mit einem Profiler 22 des OS-Servers 14b verbunden. Dieser Profiler 22 ist dazu ausgebildet, die Bedienabläufe des Anwenders bzw. Operators zu erfassen, zu evaluieren und einzuordnen, wobei diese erfassten Bedienabläufe in einem Archiv 24 hinterlegt werden. Stellt der Profiler 22 fest, dass der Operator bestimmte Bedienhandlungen vornimmt - z. B. quittieren eines Alarms nur über Alarm Views - übermittelt der Profiler 22 die erkannten Beobachtungen ("active Operator Actions") dem Selektor 19. Aufgrund dieser Beobachtungen kann der Selektor 19 dem Operator entsprechende Kapitel der Dokumentation vorschlagen, die dem Operator beispielsweise alternative oder effizientere Methoden zur Quittierung von Alarmen vorschlägt, z. B. anstelle von Einzelquittierungen Sammelquittierungen über Anlagenbilder.

Die OS-Station 14a, 14 b weist eine hier nicht dargestellte Signiereinrichtung auf. Mittels dieser kann der Operator die ihm bereitgestellte Dokumentation mit seinem - beispielsweise auf einer Smart Card hinterlegten - privaten Schlüssel signieren, welcher an die Identität des Operators gebunden ist. Dadurch bestätigt der Anwender verbindlich, dass er die selektive Anlagendokumentation bzw. die bereitgestellte Dokumentation gelesen hat, wobei der Anwender seinen Lesefortschritt kapitelweise quittieren und signieren kann.

Mittels der angegebenen Maßnahmen wird eine geführte, verbindliche und im Hinblick auf ein Zugriffsmanagement kollaborative Dokumentation für einen Anwender eines Prozessleitsystems verwirklicht. Eine Verbindlichkeit und Nichtabstreitbarkeit wird sichergestellt, was bedeutet, dass der Anwender nicht abstreiten kann, dass er das ihm bereitgestellte Dokument erhalten und als gelesen quittiert hat. Es wird somit ein effizientes, verbindliches, rollen-, berechtigungs- sowie anwenderspezifisches Dokumentenmanagement im Kontext eines Prozessleitsystems ermöglicht.

## Patentansprüche

1. Verfahren zum Betrieb einer Ein- und Ausgabevorrichtung für eine industrielle Anlage, wobei die Ein- und Ausgabevorrichtung (14a, 14 b) umfasst
- einen Dokumentationsmanager (18), welcher eine Anlagendokumentation (23) für die industrielle Anlage bereitstellt,
- einen Dokumentenbetrachter (20) zur Anforderung und Ausgabe zumindest eines Teils der Anlagendokumentation (23),
**dadurch gekennzeichnet, dass**
mittels eines mit dem Dokumentationsmanager (18) verbundenen Selektors (19) aufgrund mindestens eines vorgebbaren oder vorgegebenen Kriteriums (9 bis 12) ein Dokumentationsprofil für einen Anwender (3) erstellt wird, wobei in Abhängigkeit des Dokumentationsprofils die Ausgabe einer durch den Anwender (3) angeforderten Anlagendokumentation (23) oder eines angeforderten Teils dieser Anlagendokumentation (23) beschränkt wird.

2. Verfahren nach Anspruch 1, **dadurch gekennzeichnet, dass** die beschränkte Ausgabe (4) durch den Anwender quittiert und/oder signiert wird.

3. Verfahren nach Anspruch 1 oder 2, **dadurch gekennzeichnet, dass** als Kriterium zur Erstellung des Dokumentationsprofils Zugriffsrechte des Anwenders auf Hard- und/oder Software-Komponenten der industriellen Anlage berücksichtigt werden, wobei die Zugriffsrechte abhängig von der Anwenderrolle sind.

4. Verfahren nach einem der Ansprüche 1 bis 3, **dadurch gekennzeichnet, dass** mittels eines Profilers (22) der Ein- und Ausgabevorrichtung (14a, 14b) Bedienabläufe und/oder Bedienhandlungen des Anwenders (3) während des Anlagenbetriebs erfasst und diese mittels des Selektors (19) als Kriterium zur Erstellung des Dokumentationsprofils berücksichtigt werden.

5. Verfahren nach einem der Ansprüche 1 bis 4, **dadurch gekennzeichnet, dass** mittels des Selektors (19) zur Erstellung des Dokumentationsprofils als weiteres Kriterium Alarmmeldungen der Anlage berücksichtigt werden.

6. Verfahren nach einem der Ansprüche 1 bis 5, **dadurch gekennzeichnet, dass** mittels des Selektors (19) zur Erstellung des Dokumentationsprofils als Kriterium die Eigenschaft eines Clients (14a) der Ein- und Ausgabevorrichtung (1) berücksichtigt wird.

7. Verfahren nach einem der Ansprüche 1 bis 6, **dadurch gekennzeichnet, dass** für die Anlagendokumentation (23) eine Produktdokumentation und eine Projektdokumentation vorgesehen wird, wobei
- die Produktdokumentation Gerätehandbücher, Bediener- und Benutzeranleitungen, Betriebsanleitungen, Service-Unterlagen, Produktkataloge, Programmieranleitungen für die in der industriellen Anlage eingesetzten Hard- und Softwarekomponenten und
- die Projektdokumentation eine Beschreibung von verfahrenstechnischen und/oder fertigungstechnischen Prozessabläufen
umfasst.

8. Ein- und Ausgabevorrichtung für eine industrielle Anlage, umfassend
- einen Dokumentationsmanager (18), welcher eine Anlagendokumentation für die industrielle Anlage bereitstellt,
- einen Dokumentenbetrachter (20) zur Anforderung und Ausgabe zumindest eines Teils der Anlagendokumentation (23),
**dadurch gekennzeichnet, dass**
ein mit dem Dokumentationsmanager (18) verbundener Selektor (19) dazu ausgebildet ist, aufgrund mindestens eines vorgebbaren oder vorgegebenen Kriteriums (9 bis 12) ein Dokumentationsprofil für einen Anwender (3) zu erstellen und die Ausgabe einer durch den Anwender (3) angeforderten Anlagendokumentation (23) oder eines angeforderten Teils der Anlagendokumentation (23) in Abhängigkeit des Dokumentationsprofils zu beschränken.

9. Ein- und Ausgabevorrichtung nach Anspruch 8, **dadurch gekennzeichnet, dass** die Ein- und Ausgabevorrichtung (14a, 14b) dazu ausgebildet ist, die beschränkte Ausgabe (4) zu quittieren und/oder zu signieren.

10. Ein- und Ausgabevorrichtung nach Anspruch 8 oder 9, **dadurch gekennzeichnet, dass** der Selektor (19) als Kriterium zur Erstellung des Dokumentationsprofils Zugriffsrechte des Anwenders (3) auf Hard- und/oder Software-Komponenten der industriellen Anlage berücksichtigt, wobei die Zugriffsrechte abhängig von der Anwenderrolle ist.

11. Ein- und Ausgabevorrichtung nach einem der Ansprüche 8 bis 10, **dadurch gekennzeichnet, dass** die Ein- und Ausgabevorrichtung (14a, 14b) einen Profiler (22) aufweist, welcher Bedienabläufe und/oder Bedienhandlungen des Anwenders (3) während des Anlagenbetriebs erfasst, wobei der Selektor (19) die Bedienabläufe und/oder Bedienhandlungen als Kriterium zur Erstellung des Dokumentationsprofils berücksichtigt.

12. Ein- und Ausgabevorrichtung nach einem der Ansprüche 8 bis 11, **dadurch gekennzeichnet, dass** der Selektor (19) zur Erstellung des Dokumentationsprofils als weiteres Kriterium Alarmmeldungen der Anlage berücksichtigt.

13. Ein- und Ausgabevorrichtung nach einem der Ansprüche 8 bis 12, **dadurch gekennzeichnet, dass** der Selektor (19) zur Erstellung des Dokumentationsprofils als Kriterium die Eigenschaft eines Clients (14a) der Ein- und Ausgabevorrichtung (14a, 14b) berücksichtigt.

14. Ein- und Ausgabevorrichtung nach einem der Ansprüche 8 bis 13, **dadurch gekennzeichnet, dass** die Anlagendokumentation (23) eine Produktdokumentation und eine Projektdokumentation aufweist, wobei
- die Produktdokumentation Gerätehandbücher, Bediener- und Benutzeranleitungen, Betriebsanleitungen, Service-Unterlagen, Produktkataloge, Programmieranleitungen für die in der industriellen Anlage eingesetzten Hard- und Softwarekomponenten und
- die Projektdokumentation eine Beschreibung von verfahrenstechnischen und/oder fertigungstechnischen Prozessabläufen
umfasst.
